# EUROPEAN PATENT SPECIFICATION

(11) **EP 1 471 279 B1**
(45) Date of publication and mention of the grant of the patent: **22.08.2007**
(21) Application number: 04075977.1
(22) Date of filing: 31.03.2004
(51) Int. Cl.: F16D 48/06

(54) **Clutch control system and an automated manual transmission with the same**
Kupplungssteuerungssystem und automatisiertes Handschaltgetriebe
Système de commande d'embrayage et boîte de vitesse manuelle automatisée

(30) Priority: 31.03.2003 JP 2003094056
(43) Date of publication of application: 27.10.2004
(73) Proprietor: AISIN SEIKI KABUSHIKI KAISHA, Kariya-shi, Aichi-ken (JP)
(72) Inventor: Terakawa, Tomomitsu, Anjo-shi Aichi-ken (JP); Taguchi, Yoshinori, Anjo-shi Aichi-ken (JP); Shimizu, Masaru, Toyota-shi Aichi-ken (JP); Tamaru, Daisuke, Anjo-shi Aichi-ken (JP)
(74) Representative: Serjeants

(56) References cited:
- EP-A- 1 251 288
- DE-A1- 10 209 839
- US-A- 5 101 688
- US-A1- 2002 074 207

## Description

### FIELD OF THE INVENTION

This invention generally relates to a clutch control system for a vehicle and an automated manual transmission with the same.

### BACKGROUND

There is a conventional clutch control system which controls a start timing of a creep run and a terminate timing thereof. The control of the creep run is performed by use of a linear sensor. More particularly, the linear sensor detects a brake operating condition and outputs a linear signal in response to the brake operating condition. The control of the creep run can be performed based upon the linear signal. Meanwhile, there is a clutch control system disclosed in Japanese Patent Laid-Open Publication No. 1987-216842. This clutch control system judges whether the creep run is started and terminated, based upon an on/off signal outputted from a switch (an on/off switch).

However, the linear sensor of the conventional clutch control system may not be economical to be used for the vehicle. In the meantime, according to the latter clutch control system with the switch, generation of a creeping force may be delayed. In this case, a vehicle rearward movement may occur or further may be increased when the vehicle is starting to move on an upward slope, for example.

US-A-2002/0074207 discloses a clutch control system in which the vehicle brake has two associated microswitches, to be triggered consecutively with a time delay one after the other, or consecutively on progressive brake-actuating movement of a brake pedal. Either one of the microswitch outputs may be used to disable a clutch creep run, although there is no teaching of means for initiating the commencement of such a creep run.

A need exists for providing an improved clutch control system for an automated manual transmission system, which can be manufactured at a moderate cost and can initiate the creep run at an appropriate timing when the vehicle is starting to move.

### SUMMARY OF THE INVENTION

The invention provides a clutch control system as defined in claim 1.

It is further preferable that the means for controlling the creep run starts the creep run when the first signal is shifted from the ON state to the OFF state when the creep run has not been started.

It is still further preferable that the means for controlling the creep run terminates the creep run when the first signal is shifted from the OFF state to the ON state.

### BRIEF DESCRIPTION OF THE DRAWING FIGURES

The foregoing and additional features and characteristics of the present invention will become more apparent from the following detailed description considered with reference to the accompanying drawing figures, wherein:
Fig. 1 is a vehicle system provided with a clutch control device according to an embodiment of the present invention;
Fig. 2 is a flowchart for explaining an operation of a vehicle system illustrated in Fig. 1;
Fig. 3 is a flowchart for explaining a subroutine of step S4 of the flowchart illustrated in Fig. 2;
Fig. 4 is a flowchart for explaining a subroutine of step S6 of the flowchart illustrated in Fig. 2;
Fig. 5 is a flowchart for explaining a subroutine of step S22 of the flowchart illustrated in Fig. 4; and
Fig. 6 is a flowchart for explaining a routine following the routine illustrated in Fig. 5.

### DETAILED DESCRIPTION

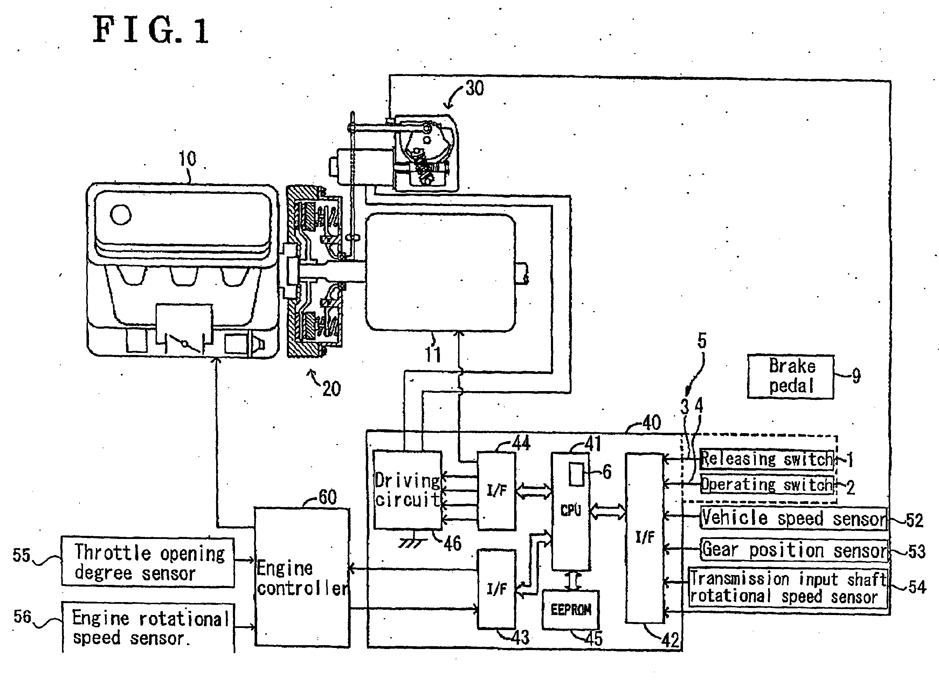

As illustrated in Fig. 1, a vehicle system includes a driving power source 10, a transmission 11, and a clutch assembly 20 arranged between the driving power source 10 and the transmission 11. The driving power source 10 can be an internal combustion engine, a inotor, and so on as non-limiting examples. According to an embodiment of the present invention, an engine represents the driving power source 10. The clutch assembly 20 can interrupt and transmit driving force outputted from the engine 10 to the transmission 11. The vehicle system can be an automated manual transmission system with the transmission 11 as a manual transmission and a mechanical clutch assembly.

The vehicle system according to the embodiment of the present invention further includes an actuator 30 corresponding to means for changing an engagement condition of the clutch assembly 20, a brake (not shown) mounted on each vehicle wheel, a clutch controller 40, and an engine controller 60. The actuator 30 is activated to operate an engaged condition of the clutch assembly 20. The brake is operated for decelerating a vehicle speed or for stopping a moving vehicle in response to the operation of a brake operating member such as a brake pedal 9 by a vehicle driver. The clutch controller 40 controls the engaged condition of the clutch assembly 20 via the actuator 30 in response to a driver's intention and in response to signals outputted from a vehicle speed sensor 52, a gear position sensor 53, a transmission input shaft rotational speed sensor 54, and so on. The engine controller 60 controls the engine 10 based upon signals outputted from the clutch controller 40, a throttle opening degree sensor 55, an engine rotational speed sensor 56, and so on.

As illustrated in Fig. 1, a clutch control system 5 according to the embodiment of the present invention includes the clutch controller 40, a releasing switch 1 corresponding to a first brake switch, and an operating switch 2 corresponding to a second brake switch. The releasing switch (a brake lamp switch) 1 outputs a first signal 3 indicating an on/off state in response to an operating amount of the brake pedal 9, e.g., in response to a stroke position of the brake pedal 9. The operating switch (a cruise control brake switch) 2 outputs a second signal 4 indicating an on/off state in response to the stroke position of the brake pedal 9. Both of the releasing switch 1 and the operating switch 2 can be represented by brake switches, respectively.

There are at least two stroke points of the brake pedal 9:1) a first stroke point; and 2) a second stroke point defined at an operating side from the first stroke point. The releasing switch 1 outputs the first signal 3 indicating the ON state when the stroke position of the brake pedal 9 is at the operating side from the first stroke point but not at the operating side from the second stroke point, and outputs the first signal 3 indicating the OFF state when the stroke position of the brake pedal 9 is not at the operating side from the first stroke point. The operating switch 2 outputs the second signal 4 indicating the ON state when the stroke position of the brake pedal 9 is at the operating side from the second stroke point, and outputs the second signal 4 indicating the OFF state when the stroke position of the brake pedal 9 is not at the operating side from the second stroke point but at the operating side from the first stroke point.

As described above, according to the embodiment of the present invention, the clutch control system includes a plurality of brake switches. The clutch control system can initiate the creep run by slidably engaging the clutch assembly 20 when the second signal 4 outputted from the second brake switch 2 is shifted. Further, when the vehicle is provided with a cruise control switch, the cruise control brake switch can be employed as the second brake switch 2. Further, generally speaking, the brake switch can be manufactured at a lower cost than a linear sensor.

The clutch controller 40 includes a central processing unit 41 (hereinafter, referred to as a CPU 41), interfaces (I/F) 42, 43, 44, an electronically Erasable and Programmable Read Only Memory 45 (hereinafter, referred to as an EEPROM 45), and a driving circuit 46. The I/FS 42, 43, and 44 are employed for inputting the signals outputted from the respective sensors and the engine controller 60 to the CPU 41. The EEPROM 45 is connected to the CPU 41 and can memorize a predetermined set value that can be updated. The driving circuit 46 activates the actuator 30 in response to the command from the CPU 41. The clutch controller 40 controls the engaged condition of the clutch assembly 20 via the actuator 30 in response to a throttle opening degree detected by the throttle opening degree sensor 55, a rotational speed of a crankshaft detected by the engine rotational speed sensor 56, a vehicle speed detected by the vehicle speed sensor 52, a gear position detected by the gear position sensor 53, and a stroke position of the brake pedal 9.

According to the embodiment of the present invention, the CPU 41 performs a program for controlling a vehicle creep run. This program is preferably performed with the clutch assembly 20 under a half-engaged condition when the vehicle is starting to move. This program is referred to as a creep controlling means 6 corresponding to means for controlling a creep run. The creep controlling means 6 can initiate the vehicle creep run by almost half-engaging the clutch assembly 20 via the actuator 30 at least when the second signal 4 is shifted from the ON state to the OFF state upon the vehicle starting.

Next, following explanation will be given for explaining details of the operation of the vehicle system according to the embodiment of the present invention.

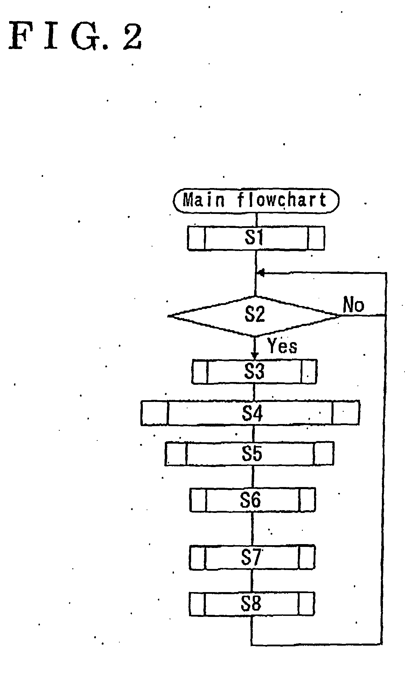

With reference to Fig. 2, when the vehicle system activates, initialization for the engine controller 60 and the clutch controller 40 is performed at step S1. At step S2, the CPU 41 judges whether a predetermined period of time has passed after the initialization. According to the embodiment of the present invention, it is preferable to set the predetermined period of time at 4 msec as a non-limiting example. After the predetermined period of time, the program proceeds to step S3 in which the signals outputted from the various types of sensors are inputted to the engine controller 60 or the clutch controller 40. Each of the signals represents the vehicle condition. At step S4, the CPU 41 computes an early creep run flag based upon the various detected signals. At step S5, the CPU 41 computes a required shift position. At step S6, the CPU 41 controls the clutch assembly 20. At step S7, the CPU 41 controls the transmission 11. At step S8, the CPU 41 outputs predetermined control signals to the engine 10 and the actuator 30, respectively.

Next, following explanation will be given for explaining details of computing the early creep run flag. The creep controlling means 6 performs the calculation of the early creep run flag based upon the second signal 4 outputted from the operating switch 2 illustrated in Fig. 1. Therefore, the creep controlling means 6 can judge whether generation of a creeping force should be expedited.

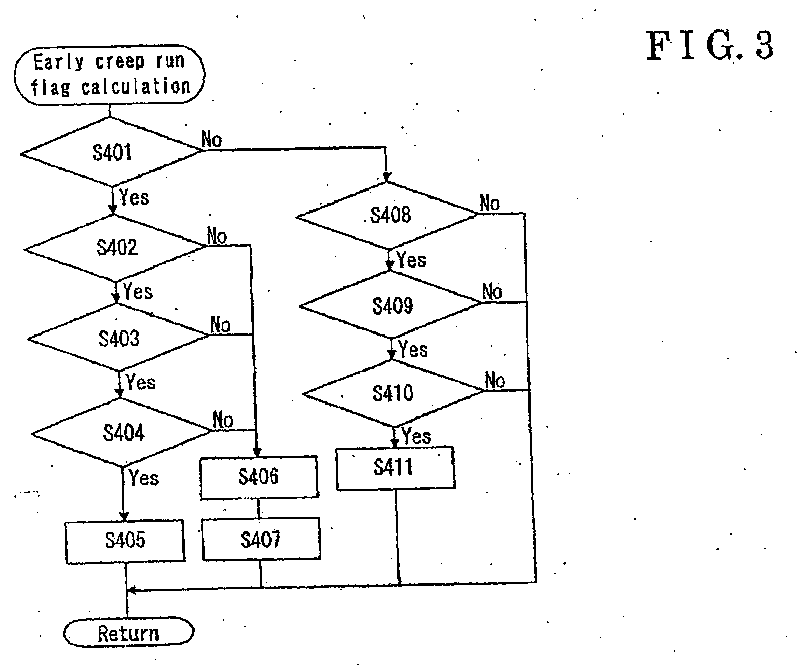

At step S401 in Fig. 3, the creep controlling means 6 judges whether the early creep run flag is ON. When a negative answer "No" is obtained at step S401, i.e., when the creep controlling means 6 recognizes that the early creep run flag is OFF, the program proceeds to step S408. At step S408, the creep controlling means 6 judges whether the operating switch 2 is at an OFF state. When an affirmative answer "Yes" is obtained at step S408, the program proceeds to step S409. At step S409, the creep controlling means 6 judges whether the releasing switch 1. is at an ON state. When an affirmative answer "Yes" is obtained at step S409, the program proceeds to step S410. At step S410, the creep controlling means 6 judges whether the operating switch 2 was at an ON state at a previous cycle. When an affirmative answer "Yes" is obtained at step S410, the program proceeds to step S411, in which the early creep run flag is set at an ON state. Therefore, according to the embodiment of the present invention, the starting timing of the creep run can be prevented from being delayed.

On the other hand, when an affirmative answer "Yes" is obtained at step S401, i.e., when the creep controlling means 6 recognizes that the early creep run flag is at the ON state, the program proceeds to step S402. At step S402, the creep controlling means 6 judges whether the operating switch 2 is at the off state. When an affirmative answer "Yes" is obtained at step S402, the program proceeds to step S403. At step S403, the creep controlling means 6 judges whether the releasing switch 1 is at the on state. When the affirmative answer "Yes" is obtained at step S403, the program proceeds to step S404. At step S404, the creep controlling means 6 judges whether an early creep run timer is less than a predetermined period of time. When an affirmative answer "Yes" is obtained at step S404, the program proceeds to step S405. At step S405, the creep controlling means 6 increases the early creep run timer. When the affirmative answer "Yes" are obtained at all steps 402, 403, and 404, the program proceeds to step S405. However, when a negative answer "No" is obtained at at least one of steps 402, 403, and 404, the program proceeds to step S406. At step S406, the creep controlling means 6 sets the early creep run flag at the OFF state. At step S407, the creep controlling means 6 cancels the early creep ruh timer. According to the embodiment of the present invention, the early creep run timer is increased at step S405. Therefore, the creep controller 6 can avoid generating the creeping force after passing the predetermined period of time upon the vehicle start.

Next, following explanation will be given for explaining the clutch control performed at step S6 of the flowchart illustrated in Fig. 1. The clutch control is performed by the clutch controller 40.

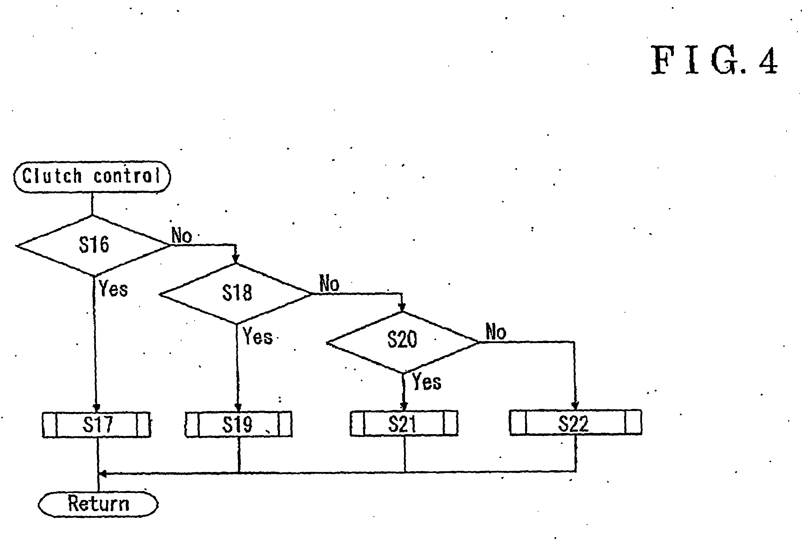

At step S16 illustrated in Fig. 4, the clutch controller 40 judges whether a currently selected shift position substantially does not correspond to a target shift position required by the driver or by the engine controller 60. When an affirmative answer "Yes" is obtained at step S16, i.e., when the currently selected shift position does not correspond to the target shift position, the program proceeds to step S17. At step S17 the clutch controller 40 performs the shift operation. On the other hand, when a negative answer "No" is obtained at step. S16, i.e., when the currently selected shift position corresponds to the target shift position, the program proceeds to step S18. At Step S18 the clutch controller 40 judges whether the currently selected shift position corresponds to a neutral position. When an affirmative answer "Yes" is obtained at step S18, the program proceeds to step S19. At step S19, the clutch controller 40 controls the vehicle to stop. On the other hand when a negative answer "No" is obtained at step S18, the program proceeds to step S20. At step S20, the clutch controller 40 judges whether the vehicle speed is substantially equal to a predetermined vehicle speed or greater than that. When an affirmative answer "Yes" is obtained at step S20, i.e., when the vehicle is running at a speed equal to or greater than a predetermined speed, the program proceeds to step S21. At step S21, the clutch controller 40 controls the vehicle to run. On the other hand when a negative answer "No" is obtained at step S20, i.e., when the vehicle is judged to be stopping, the program precedes to step S22. At step S22, the clutch controller 40 controls the vehicle to stop or to be started.

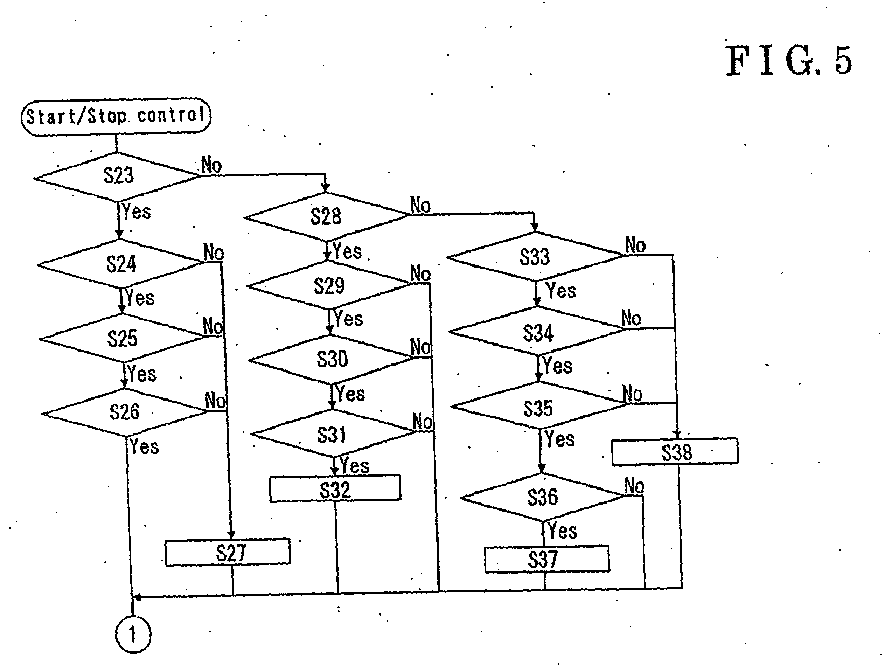

Next, following explanation will be given for explaining the vehicle start / stop control at step S22 illustrated in Fig. 4. The vehicle start / stop control includes three types of modes:
1) a stop mode;
2) a start mode; and
3) a stop transit mode.
During the stop mode in the left side in Fig. 5, the clutch 20 is kept under the disengaged condition. The stop mode is shifted to the start mode if at least one of the following vehicle conditions is satisfied;
1) when the releasing switch 1 is switched off;
2) when the early creep run flag is shifted to the on stage.

During the start mode at a center in Fig. 5, the clutch 20 is controlled to be engaged at a target position determined based upon the accelerator opening degree and the engine rotational speed. However, when the target position is positioned at a disengagement side from a position corresponding to a predetermined value 1, the clutch 20 is controlled to be engaged to a position corresponding to a predetermined value 2 at a constant speed.

The start modo at the right side in Fig. 5 is shifted to the stop transit mode when the following three conditions are satisfied;
1) When the releasing switch 1 is at the on state,
2) when the early creep run flag is at the OFF state, and
3) when the brake pedal 9 has not been operated, i.e., when the releasing switch 1 is shifted from the off state to the on state.

During the stop transit mode at a lower center in Fig. 5, the clutch 20 is controlled to be disengaged. However, when the position of the clutch 20 is at the disengagement side from a predetermined position value 3, the clutch 20 is controlled to be disengaged at a constant speed. When the clutch 20 is disengaged during the stop transit mode, the stop transit mode is shifted to the stop mode.

The stop transit mode is shifted to the start mode when at least one of the following conditions is satisfied;
1) when the releasing switch 1 is at the OFF state;
2) when the early creep run flag is at the ON state; and
3) when the acceleration si ON.

Next, following explanation will be given for explaining details of each aforementioned mode.

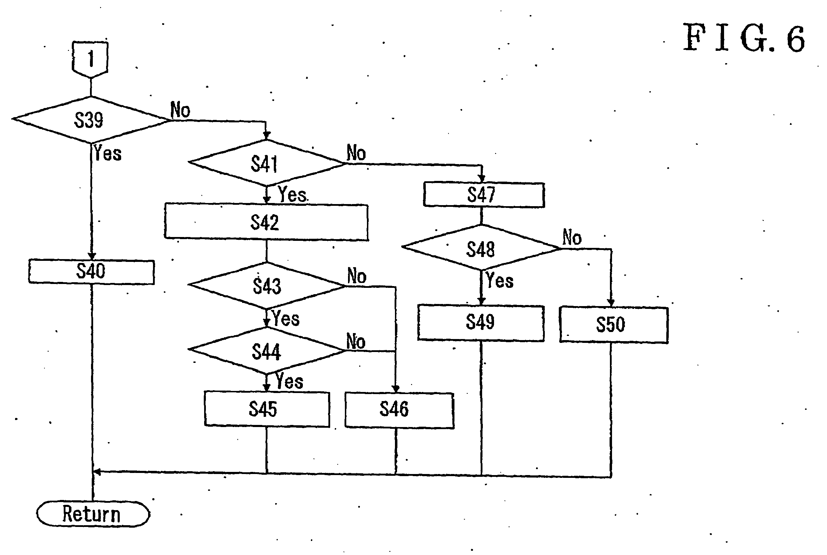

With reference to Fig. 5, the clutch controller 40 having the creep controlling means 6 judges whether the control mode is the stop mode at step S23. When an affirmative answer "Yes" is obtained at step S23, the program proceeds to step S24. At step S24, the clutch controller 40 judges whether the first signal 3 outputted from the releasing switch 1 is at the ON state. In this case, when the first signal 3 is judged to be at the OFF state, the program proceeds to step S27, in which the stop mode is shifted to the start mode. On the other hand, when the first signal 3 is judged to be at the ON state at step S24, the program proceeds to step S25. At step S25, the clutch controller 40 judges whether the early creep run flag is at the OFF state. When a negative answer "No" is obtained at step S25, i.e., when the early creep run flag is judged to be at the ON state, the program proceeds to step S27. On the other hand, when an affirmative answer "Yes" is obtained at step S25, the program proceeds to step S26. At step S26,the clutch controller 40 judges whether the brake pedal 9 is at the OFF state , i.e, the clutch controller 40 judges whether the first signal 3 is shifted from the ON state to the OFF state. When a negative answer "No" is obtained at step S26, the program proceeds to step S27 wherein the stop mode is shifted to the start mode. On the other hand, when an affirmative answer "Yes" is obtained at step S26, the program proceeds to step S39 (illustrated in Fig. 6).

When the control mode is judged to be the start mode at steps S23 and S28, the clutch controller 40 judges at step S29 whether the first signal 3 outputted from the releasing switch 1 is at the ON state. When a negative answer "No" is obtained at step S29, i.e., when the first signal 3 is at the OFF state, the program proceeds to step S39 in Fig. 6. On the other hand, when an affirmative answer "Yes" is obtained at step S29, the program proceeds to step S30 in which the clutch controller 40 judges whether the early creep run flag is at the OFF state. When the early creep run flag is judged to be at the ON state, the program proceeds to step S39. On the other hand, when the early creep run flag is judged to be at the OFF state, the program proceeds to step S32, in which the control mode is shifted to the stop mode. The program then proceeds to step S39 in Fig. 6.

Going back to Fig. 5, when the clutch controller 40 recognizes at step S28 that the control mode is not the start mode, the program proceeds to step S33. At step S33, the clutch controller 40 judges whether the releasing switch 1 is at the ON state. When a negative answer "No" is obtained at step S33, the program proceeds to step S38, wherein the control mode is set at the start mode. Further, the program proceeds to step S39 (illustrated in Fig. 6). On the other hand, when an affirmative answer "Yes" is obtained at step S33, i.e., when the releasing switch 1 is at the ON state, the program proceeds to step S34. At step S34, the clutch controller 40 judges whether the early creep run flag is at the OFF state. When an affirmative answer "Yes" is obtained at step S34, the program proceeds to step S35. At step S35, the clutch controller 40 judges whether the acceleration is OFF. When the acceleration is at the OFF state, the program proceeds to step S36. On the other hand, when the acceleration is at the ON state at step S35, the program proceeds to step S39 illustrated in Fig. 6. At step S36, the clutch controller 40 judges whether the clutch 20 has been disengaged. When a negative answer "No" is obtained at step S36, the program proceeds to step S39. On the other hand, when an affirmative answer "Yes" is obtained at step S36, the program proceeds to step S37, wherein the control mode is set at the stop mode.

Next, following explanation will be given for explaining the process of the start mode and the stop mode. At step S39, the clutch controller 40 judges whether the control mode is the stop mode. When an affirmative answer "Yes" is obtained at step S39, the program proceeds to step S40. At step S40, the clutch 20 is maintained at the disengaged position. On the other hand, when a negative answer "No" is obtained at step S39, the program proceeds to step S41. At step S41, the clutch controller 40 judges whether the control mode is the start mode. When an affirmative answer "Yes" is obtained at step S41, the program proceeds to step S42. In this case, the creep run promoting control can be performed. At steps S43 and S44, when the current position of the engagement element of the clutch assembly 20 is away from the target positions such as the predetermined position values 1 and 2, the program proceeds to step S46, in which the engagement element of the clutch assembly 20 is engaged at the fastest engaging speed. When the current position of the engagement element of the clutch assembly 20 is relatively close to the target positions, the program proceeds to step S45, in which the engagement element of the clutch assembly 20 is engaged at a predetermined engaging speed. Therefore, according to the embodiment of the present invention, the vehicle creep run can be expedited by half-engaging the clutch assembly 20.

On the other hand, when the control mode is not the start mode at step S41, the program proceeds to step S47. At step S47, the clutch controller 40 computes the target position of the engagement element of the clutch assembly 20, e.g., a clutch disc. At step S48, when the current position of the engagement element of the clutch assembly 20 is away from the target position such as the predetermined position value 3, the program proceeds to step S50, in which the engagement element of the clutch assembly 20 is disengaged at the fastest disengaging speed. When the current position of the engagement element is relatively close to the target position, the program proceeds to step S49 in which the clutch assembly 20 is disengaged at a predetermined disengaging speed.

## Claims

1. A clutch control system for a vehicle comprising
a driving power source (10),
a transmission (11),
a clutch assembly (20) operatively connected between the driving power source (10) and the transmission (11) for establishing or interrupting transmission of driving power from the driving power source (10) to the transmission (11),
means for changing an engagement condition of the clutch assembly (30), and
a brake adjustable to decelerate or stop a vehicle in response to a position of a brake operating member (9) operated by a driver, wherein the clutch control system further comprises:
a first switch (1) responsive to the position of the brake operating member (9), to output a first signal (3) which is OFF when the brake operating member (9) is in a rest position and turns ON when the brake operating member passes a first point in its brake operating movement;
a second switch (2) responsive to the position of the brake operating member (9), to output a second signal (4) which is OFF when the brake operating member (9) is in the rest position and turns ON when the brake operating member passes a second point in its brake operating movement, the second point being more remote from the rest position than the first point, corresponding to a greater degree of brake application; and
means for controlling a creep run (6) in response to the state of at least one of the first and second switches (1,2);
**characterized in that** the means for controlling the creep run (6) initiates a creep run for moving the vehicle when the first signal (3) is shifted from the ON state to the OFF state, and
initiates an early creep run, prior to the creep run for moving the vehicle, by causing the means for changing the engagement condition of the clutch assembly (30) to engage the clutch assembly (20) when the second signal (4) is shifted from the ON state to the OFF state and terminates the early creep run when a condition that the second signal is at the OFF state and the first signal is at the ON state has continued for a predetermined period of time.

2. A clutch control system for a vehicle according to claim 1, wherein the means for controlling the creep run (6) starts the creep run for moving the vehicle when the first signal is shifted from the ON state to the OFF state when the early creep run has not been started.

3. A clutch control system for a vehicle according to claim 1, wherein the means for controlling the creep run (6) terminates the creep run for moving the vehicle when the first signal (3) is shifted from the OFF state to the ON state.

4. A clutch control system according to any preceding claim, applied in an automated manual transmission system.

## Patentansprüche

1. Kupplungssteuerungssystem für ein Fahrzeug, enthaltend:
eine Antriebsleistungsquelle (10),
ein Getriebe (11),
eine Kupplungsanordnung (20), die operativ zwischen der Antriebsleistungsquelle (10) und dem Getriebe (11) zum Herstellen oder Unterbrechen einer Übertragung von einer Antriebsleistung von der Antriebsleistungsquelle (10) an das Getriebe (11) angeschlossen ist,
ein Mittel zum Verändern eines Eingriffszustands der Kupplungsanordnung (30), und
eine Bremse, die zum Verzögern oder Stoppen eines Fahrzeugs in Abhängigkeit von einer Position eines Bremsbetätigungselements (9), das durch einen Fahrer betätigt wird, justierbar ist, wobei das Kupplungssteuerungssystem weiter enthält:
einen ersten Schalter (1), der auf die Position des Bremsbetätigungselements (9) ansprechend ist, zum Ausgeben eines ersten Signals (3), das AUS ist, wenn das Bremsbetätigungselement (9) in einer Ruheposition ist, und auf AN schaltet, wenn das Bremspedalbetätigungselement einen ersten Punkt in seiner Bremsbetätigungsbewegung passiert;
einen zweiten Schalter (2), der auf die Position des Bremsbetätigungselements (9) ansprechend ist, zum Ausgeben eines zweiten Signals (4), das AUS ist, wenn das Bremsbetätigungselements (9) in der Ruheposition ist, und auf AN schaltet, wenn das Bremsbetätigungselement einen zweiten Punkt in seiner Bremsbetätigungsbewegung passiert, wobei der zweite Punkt weiter entfernt von der Ruheposition als der erste Punkt ist, was einem größeren Maß der Bremsanwendung entspricht; und
ein Mittel zum Steuern eines Kriechens (6) in Abhängigkeit von dem Zustand von zumindest entweder dem ersten oder dem zweiten Schalter (1, 2);
**dadurch gekennzeichnet, dass** das Mittel zum Steuern des Kriechens (6) ein Kriechen zum Bewegen des Fahrzeugs initialisiert, wenn das erste Signal (3) aus dem AN-Zustand in den AUS-Zustand geschaltet wird, und
ein frühes Kriechen initialisiert, vor dem Kriechen zum Bewegen des Fahrzeugs, durch Bewirken, dass das Mittel zum Verändern des Eingriffszustands der Kupplungsanordnung (30) die Kupplungsanordnung (20) in Eingriff nimmt, wenn das zweite Signal (4) aus dem AN-Zustand in den AUS-Zustand geschaltet wird, und das frühe Kriechen beendet, wenn ein Zustand, dass das zweite Signal in dem AUS-Zustand ist und das erste Signal in dem AN-Zustand ist, sich während einer vorbestimmten Zeitdauer fortgesetzt hat.

2. Kupplungssteuerungssystem für ein Fahrzeug nach Anspruch 1, wobei das Mittel zum Steuern des Kriechens (6) das Kriechen zum Bewegen des Fahrzeugs beginnt, wenn das erste Signal aus dem AN-Zustand in den AUS-Zustand geschaltet wird, wenn das frühe Kriechen nicht gestartet worden ist.

3. Kupplungssteuerungssystem für ein Fahrzeug nach Anspruch 1, wobei das Mittel zum Steuern des Kriechens (6) das Kriechen zum Bewegen des Fahrzeugs beendet, wenn das erste Signal (3) aus dem AN-Zustand in den AUS-Zustand geschaltet wird.

4. Kupplungssteuerungssystem für ein Fahrzeug nach einem der vorhergehenden Ansprüche, das für ein automatisiertes Handschaltgetriebesystem angewendet wird.

## Revendications

1. Système de commande d'embrayage destiné à un véhicule comprenant
une source d'énergie motrice (10),
une transmission (11),
un ensemble d'embrayage (20) relié de manière opérationnelle entre la source d'énergie motrice (10) et la transmission (11) afin d'établir ou d'interrompre la transmission de l'énergie motrice entre la source d'énergie motrice (10) et la transmission (11),
un moyen destiné à changer une condition d'engagement de l'ensemble d'embrayage (30), et
un frein ajustable afin de décélérer ou d'arrêter un véhicule en réponse à une position d'un élément d'actionnement de frein (9) actionné par un conducteur, dans lequel le système de commande d'embrayage comprend en outre :
un premier commutateur (1) réagissant à la position de l'élément d'actionnement de frein (9), afin de transmettre un premier signal (3) qui est OFF lorsque l'élément d'actionnement de frein (9) est dans une position de repos, et devient ON lorsque l'élément d'actionnement de frein dépasse un premier point de son mouvement d'actionnement de frein ;
un second commutateur (2) réagissant à la position de l'élément d'actionnement de frein (9), afin de transmettre un second signal (4) qui est OFF lorsque l'élément d'actionnement de frein (9) se trouve dans la position de repos, et devient ON lorsque l'élément d'actionnement de frein dépasse un second point de son mouvement d'actionnement de frein, le second point étant plus distant de la position de repos que le premier point, correspondant à un plus grand degré d'application de frein ; et
un moyen destiné à contrôler un glissement (6) en réponse à l'état d'au moins l'un du premier et du second commutateurs (1, 2) ;
**caractérisé en ce que** le moyen destiné à contrôler le glissement (6) déclenche un glissement afin de déplacer le véhicule lorsque le premier signal (3) passe de l'état ON à l'état OFF, et
déclenche un glissement prématuré, avant le glissement destiné à déplacer le véhicule, en provoquant le fait que le moyen destiné à changer la condition d'engagement de l'ensemble d'embrayage (30) engage l'ensemble d'embrayage (20) lorsque le second signal (4) passe de l'état ON à l'état OFF, et termine le glissement prématuré lorsqu'une condition selon laquelle le second signal est OFF et le premier signal est ON s'est poursuivie pendant une période de temps prédéterminée.

2. Système de commande d'embrayage destiné à un véhicule selon la revendication 1, dans lequel le moyen destiné à contrôler le glissement (6) déclenche le glissement afin de déplacer le véhicule lorsque le premier signal passe de l'état ON à l'état OFF lorsque le glissement prématuré n'a pas été déclenché.

3. Système de commande d'embrayage destiné à un véhicule selon la revendication 1, dans lequel le moyen destiné à contrôler le glissement (6) termine le glissement destiné à déplacer le véhicule lorsque le premier signal (3) passe de l'état OFF à l'état ON.

4. Système de commande d'embrayage destiné à un véhicule selon l'une quelconque des revendications précédentes, appliqué dans un système de transmission manuelle automatisée.
